# EUROPÄISCHE PATENTANMELDUNG

(11) **EP 1 607 295 A2**
(43) Veröffentlichungstag der Anmeldung: **21.12.2005**
(21) Anmeldenummer: 05012782.8
(22) Anmeldetag: 14.06.2005
(51) Int. Cl.: B60S 5/06, B66F 9/075

(54) **Vorrichtung und Verfahren zum Wechseln von Mitnahmekörpern, insbesondere Batterien, an einem Fahrzeug sowie Fahrzeug hierzu**

(30) Priorität: 18.06.2004 DE 102004029410
(71) Anmelder: Jungheinrich Aktiengesellschaft, 22047 Hamburg (DE)
(72) Erfinder: Bögelein, Rolf, 74564 Crailsheim (DE)
(74) Vertreter: Tiesmeyer, Johannes

(57) **Zusammenfassung**

An einer Mitnahmekörper-Wechselvorrichtung (10) mit einer Anbringungsstation (12) und einer Abnahmestation (14) zum Anbringen wenigstens eines ersten Mitnahmekörpers (32), vorzugsweise Energiespeichers (32), besonders bevorzugt Batterie (32), an einem Fahrzeug (50), insbesondere Flurförderzeug (50), beziehungsweise zum Abnehmen wenigstens eines vom ersten verschiedenen zweiten Mitnahmekörpers (38) von dem Fahrzeug (50), führt die Anbringungsstation (12) dem Fahrzeug (50) den ersten Mitnahmekörper (32) im Wesentlichen in einer Mitnahmekörper-Verladerichtung (V) zu und ist der zweite Mitnahmekörper (38) durch Verlagerung in der Mitnahmekörper-Verladerichtung (V') vom Fahrzeug (50) abnehmbar und der Abnahmestation (14) zuführbar.

## Beschreibung

Die vorliegende Erfindung betrifft eine Vorrichtung und ein Verfahren zum effizienten und schnellen Wechseln von Mitnahmekörpern an einem Fahrzeug sowie ein in Wechselwirkung mit der erfindungsgemäßen Mitnahmekörper-Wechselvorrichtung besonders geeignetes Fahrzeug.

Obwohl die vorliegende Erfindung im Folgenden an dem besonders bevorzugten Einsatzbeispiel eines Flurförderzeugs als Fahrzeug sowie von Energiespeichern für elektrische Energie, wie z.B. Batterien und Akkumulatoren, als Mitnahmekörper erläutert wird, sei ausdrücklich darauf hingewiesen, dass die vorliegende Erfindung an jedem beliebigen Fahrzeug sowie mit beliebigen Mitnahmekörpern ausführbar ist. Als Mitnahmekörper können dabei insbesondere andere Energiespeicher, wie etwa Kraftstofftanks, insbesondere Gas- oder Flüssiggasbehälter oder Benzin- oder Dieseltanks dienen. Auch beliebige Transportbehälter zum Transport von Gütern sollen im Sinne dieser Anmeldung von dem Begriff "Mitnahmekörper" umfasst sein.

Aus dem Stand der Technik sind allgemein Flurförderzeuge bekannt, deren Antrieb von einem Energiespeicher mit einem Energieträger, wie etwa Kraftstoff oder Strom, versorgt wird. Wenn der Energiespeicher leer ist, wird dieser in der Regel gegen einen vollen Energiespeicher ausgetauscht, da dieser Austausch häufig weniger Zeit in Anspruch nimmt als das Befüllen des leeren Energiespeichers mit einem Energieträger. Dies gilt vor allem für Speicher elektrischer Energie, wie etwa Batterien oder Akkumulatoren, da hier definierte Aufladeparameter einzuhalten sind, um die Batterien vor Beschädigung während des Aufladens zu schützen.

Häufig sind Energiespeicher in wannenförmigen Ausnehmungen am Fahrzeug aufgenommen, aus welchen ein leerer Energiespeicher entnommen und ein voller Energiespeicher eingestellt werden muss. Dieser Wechselvorgang erfordert zahlreiche Bewegungsvorgänge, welche den Wechselvorgang langwierig und umständlich machen.

Es ist demgegenüber Aufgabe der vorliegenden Erfindung, eine technische Lehre anzugeben, mit der allgemein ein am Fahrzeug für einen Austausch vorgesehener Mitnahmekörper in kurzer Zeit gegen einen anderen Mitnahmekörper ausgetauscht werden kann.

Diese Aufgabe wird erfindungsgemäß gelöst durch eine Mitnahmekörper-Wechselvorrichtung mit einer Anbringungsstation zum Anbringen wenigstens eines ersten Mitnahmekörpers, vorzugsweise Energiespeichers, besonders bevorzugt Batterie, an einem Fahrzeug, insbesondere Flurförderzeug, und mit einer Abnahmestation zum Abnehmen wenigstens eines vom ersten verschiedenen zweiten Mitnahmekörpers von dem Fahrzeug, wobei der erste Mitnahmekörper dem Fahrzeug von der Anbringungsstation aus im Wesentlichen in einer Mitnahmekörper-Verladerichtung zuführbar ist und wobei der zweite Mitnahmekörper durch Verlagerung in der Mitnahmekörper-Verladerichtung vom Fahrzeug abnehmbar und der Abnahmestation zuführbar ist.

Bei der erfindungsgemäßen Mitnahmekörper-Wechselvorrichtung ist es möglich, den zweiten, noch am Fahrzeug vorhandenen Mitnahmekörper durch Verlagerung in der gleichen Richtung, in welcher der erste Mitnahmekörper dem Fahrzeug zugeführt wird, vom Fahrzeug abzunehmen. Durch diese gleich gerichtete Bewegung der Zuführung des ersten Mitnahmekörpers zum Fahrzeug hin und der Abnahme des zweiten Mitnahmekörpers vom Fahrzeug weg können diese beiden Bewegungen über einen wesentlichen Abschnitt der Mitnahmekörperbewegung gleichzeitig ausgeführt werden, was den Wechsel von Mitnahmekörpern beschleunigt und vereinfacht.

Grundsätzlich können die Anbringungsstation und die Abnahmestation beliebig vorgesehen sein, solange ihre Anordnung ermöglicht, den zweiten Mitnahmekörper in der gleichen Mitnahmekörper-Verladerichtung vom Fahrzeug abzunehmen, in welcher der erste Mitnahmekörper dem Fahrzeug zugeführt wird. Bevorzugt sollten die Anbringungsstation und die Abnahmestation auf einer Bodenfläche montierbar sein, etwa auf einer Bodenfläche einer Werkshalle, auf welcher Fahrzeuge üblicherweise fahren. Dies verringert den Aufwand für einen Aufbau der Mitnahmekörper-Wechselvorrichtung erheblich.

Dabei ist es weiter von Vorteil, wenn das Fahrzeug zwischen der Anbringungsstation und der Abnahmestation anordenbar ist, d.h. wenn bei einem Wechsel von Mitnahmekörpern die eine Station: Anbringungsstation und Abnahmestation, sich auf einer Fahrzeugseite und die jeweils andere Station sich auf einer anderen, der einen entgegengesetzten Fahrzeugseite befindet. Hierzu ist es vorteilhaft, wenn die Anbringungsstation und die Abnahmestation mit einem in Mitnahmekörper-Verladerichtung verlaufenden Abstand voneinander angeordnet sind, welcher derart bemessen ist, dass das Fahrzeug zwischen diesen Stationen anordenbar ist. Besonders einfach ist eine Anordnung des Fahrzeugs zwischen der Abnahmestation und der Anbringungsstation dann möglich, wenn das Fahrzeug zwischen diese Stationen eingefahren und wieder ausgefahren werden kann.

Wiederum kann grundsätzlich die Anordnung von Anbringungsstation und Abnahmestation derart sein, dass die Mitnahmekörper-Verladerichtung beliebig in Bezug auf das zwischen den Stationen anordenbare Fahrzeug orientiert ist. Da jedoch in der Regel die Längsabmessung eines Fahrzeugs wesentlich länger als eine Abmessung orthogonal zu dieser ist, kann der Verlagerungsweg der Mitnahmekörper bei einem Wechsel reduziert werden, wenn die Mitnahmekörper-Verladerichtung im Wesentlichen orthogonal zu einer Längsachse eines zwischen Anbringungs- und Abnahmestation vorhandenen oder anordenbaren Fahrzeugs verläuft. Besonders vorteilhaft ist es, wenn die Mitnahmekörper-Verladerichtung zusätzlich im Wesentlichen parallel zu einer Fahrzeugaufstandsfläche verläuft, d.h. im Wesentlichen in Fahrzeugquerrichtung, da dann in einfacher Weise der Fahrzeugrahmen, der Fahrzeugboden oder dgl. als Aufnahme für den Mitnahmekörper nutzbar ist, auf welcher der Mitnahmekörper in einfacher Weise abgestellt werden kann.

Die Zeit zum Wechseln eines Mitnahmekörpers kann noch weiter verkürzt werden, wenn die Mitnahmekörper-Wechselvorrichtung weiterhin eine zwischen den Stationen: Anbringungsstation und Abnahmestation, vorgesehene Fahrzeug-Aufnahmestation aufweist, in welcher das Fahrzeug in einer vorbestimmten Verladestellung anordenbar ist.

Die Anordenbarkeit des Fahrzeugs in der vorbestimmten Verladestellung kann in konstruktiv einfacher Weise dadurch realisiert sein, dass die Fahrzeug-Aufnahmestation wenigstens ein Anschlagmittel aufweist, welches derart angeordnet ist, dass sich das Fahrzeug in der Verladestellung befindet, wenn ein zur Anlage an dem Anschlagmittel ausgebildeter Fahrzeugabschnitt in Anlage an dem Anschlagmittel ist.

Das Anschlagmittel kann dabei zur Anlage an einen Karosserieabschnitt, an einen Abschnitt eines Hubsystems, insbesondere eines Hubmasten, oder an einen Reifenabschnitt als Fahrzeugabschnitt ausgebildet sein. Beispielsweise kann das Anschlagmittel durch eine einfache, quer zur Einfahrrichtung des Fahrzeugs verlaufende Bodenschwelle gebildet sein. Darüber hinaus kann die Fahrzeug-Aufnahmestation der Spurweite des Fahrzeugs entsprechende, in Fahrzeugeinfahrrichtung verlaufende Fahrrinnen aufweisen, um eine Anordnung des Fahrzeugs in Fahrzeugquerrichtung bezüglich der beiden Stationen festzulegen. Schließlich können das Anschlagmittel und eine Fahrzeugaufstandsfläche der Fahrzeug-Aufnahmestation relativ zueinander verlagerbar sein, um eine Anpassung an verschiedene Fahrzeugtypen, insbesondere Fahrzeuggeometrien, zu ermöglichen.

Um einen Wechsel von Mitnahmekörpern möglichst schnell einleiten zu können, ist es weiter vorteilhaft, wenn die Fahrzeug-Aufnahmestation oder/und die Stationen: Anbringungsstation und Abnahmestation, in wenigstens einer Richtung orthogonal zur Mitnahmekörper-Verladerichtung verstellbar vorgesehen sind. Dadurch können geringfügige Lageabweichungen, etwa bedingt durch unterschiedliche verwendete Reifengrößen, unterschiedlich starke Reifenabnutzung, betriebsbedingte Lageungenauigkeit des Anschlagmittels oder/und des Fahrzeugabschnitts, an welchem dieses angreifen soll, ausgeglichen werden. Dabei ist es insbesondere aufgrund von an verschiedenen Fahrzeugen eingesetzten unterschiedlichen Reifengrößen und deren unterschiedlichem Verschleiß vorteilhaft, wenn die Fahrzeug-Aufnahmestation oder/und die Stationen: Anbringungsstation und Abnahmestation, höhenveränderlich ausgebildet sind. Zusätzlich können die Fahrzeug-Aufnahmestation oder/und die Stationen: Anbringungsstation und Abnahmestation, in einer zur Mitnahmekörper-Verladerichtung und zur Höhenrichtung orthogonalen dritten Richtung verlagerbar sein.

Darüber hinaus kann daran gedacht sein, an der Fahrzeug-Aufnahmestation oder/und an wenigstens einer der Stationen: Anbringungsstation und Abnahmestation, eine Energieversorgung vorzusehen, welche ein Fahrzeug, das zwischen Anbringungsstation und Abnahmestation eingefahren ist, kontaktiert und mit elektrischer Energie versorgt, so dass das Fahrzeug auch bei einer abgenommenen Batterie als Mitnahmekörper weiterhin mit Strom versorgt ist.

Zwar kann daran gedacht sein, die Mitnahmekörper an der Wechselvorrichtung durch manuelle Krafteinwirkung zu verlagern. Bevorzugt weist jedoch wenigstens die Anbringungsstation eine Antriebseinrichtung auf, welche dazu ausgebildet ist, Mitnahmekörper zur Bewegung in der Verladerichtung anzutreiben. Hierdurch wird ein mannloser Betrieb zumindest auf Seiten der Anbringungsstation ermöglicht, wobei zu beachten ist, dass die am Fahrzeug anzubringenden Mitnahmekörper häufig ein größeres Gewicht aufweisen als die vom Fahrzeug abzunehmenden Mitnahmekörper. Dies gilt für Batterien oder sonstige Energiespeicher ebenso wie für gewöhnliche Transportbehälter, welche häufig leer vom Fahrzeug abgenommen und aufgeladen bzw. befüllt am Fahrzeug angebracht werden.

Zusätzlich oder alternativ kann die auf Seiten der Abnahmestation zu verrichtende Arbeit beim Wechseln von Mitnahmekörpern dadurch erleichtert werden, dass die Abnahmestation eine Fördereinrichtung aufweist, welche dazu ausgebildet ist, Mitnahmekörper zur Bewegung in der Mitnahmekörper-Verladerichtung anzutreiben.

Die konstruktive Gestaltung der Mitnahmekörper-Wechselvorrichtung kann erheblich vereinfacht werden, wenn der wenigstens eine erste und der wenigstens eine zweite Mitnahmekörper im Wesentlichen baugleich, vorzugsweise standardisiert, sind. Dies führt nicht nur dazu, dass die beiden Stationen: Anbringungs- und Abnahmestation, für die Verlagerung lediglich einer Art von Mitnahmekörpern ausgebildet werden müssen, sondern erleichtert auch das Vorsehen von Anbringungs- und Anschlussmöglichkeiten des Mitnahmekörpers an das Fahrzeug, falls dies gewünscht ist. Im Falle von Energiespeichern als Mitnahmekörper ist dies von Bedeutung, da die Energiespeicher mit dem Fahrzeug verbunden werden müssen, um Energie an dieses abgeben zu können.

Bei einer Mitnahmekörper-Wechselvorrichtung gemäß der vorliegenden Erfindung wird an der Anbringungsstation ein Mitnahmekörper dem Fahrzeug zugeführt, während zunächst ein am Fahrzeug vorhandener Mitnahmekörper von diesem abgenommen und der Abnahmestation zugeführt wird. Dementsprechend kann es logistisch notwendig sein, einerseits Mitnahmekörper der Anbringungsstation zuzuführen und andererseits Mitnahmekörper von der Abnahmestation wegzuführen. Eine vorteilhafte Weiterbildung der vorliegenden Erfindung löst diese logistische Aufgabe dadurch, dass zwischen Anbringungsstation und Abnahmestation eine Transportstrecke vorgesehen ist, welche zum Transport von Mitnahmekörpern zwischen den Stationen: Anbringungsstation und Abnahmestation, insbesondere von der Abnahmestation zur Anbringungsstation, ausgebildet ist. Somit können die an der Abnahmestation vom Fahrzeug abgenommenen Mitnahmekörper über die Transportstrecke der Anbringungsstation zugeführt werden.

Gemäß einer alternativen Weiterbildung kann jede der vorgesehenen Stationen: Anbringungsstation und Abnahmestation, sowohl zur Ausführung einer Mitnahmekörperanbringung an einem Fahrzeug als auch zur Ausführung einer Mitnahmekörperabnahme von einem Fahrzeug aus gebildet sein. In diesem Falle kann eine der Stationen abwechselnd als Anbringungs- und Abnahmestation und die jeweils andere Station abwechselnd als Abnahme- und Anbringungsstation eingesetzt sein. Dies hat den Vorteil, dass stets in einer der Vorrichtungen ein Mitnahmekörper vorhanden ist, welcher von dieser auch dem Fahrzeug zuführbar ist. Es kann dann ein Transport eines Mitnahmekörpers von der Abnahmestation zur Anbringungsstation entfallen.

In der Regel weisen die Mitnahmekörper, seien es nun Energiespeicher oder Transportbehälter, eine Speichereigenschaft auf. Dabei wird die Entscheidung, einen am Fahrzeug vorhandenen Mitnahmekörper durch einen anderen zu ersetzen, häufig von der Auslastung der Speichereigenschaft des jeweiligen Mitnahmekörpers getroffen. Gerade im Falle von Energiespeichern werden diese ausgetauscht, wenn ihre Speicherauslastung so gering ist, dass in Kürze zu erwarten ist, dass sie dem Fahrzeug keine weitere gespeicherte Energie zur Verfügung stellen können.

Um nun an der Anbringungsstation Mitnahmekörper mit einer höheren Speicherauslastung für das Fahrzeug bereitstellen zu können, als sie die Mitnahmekörper aufweisen, welche an der Abnahmestation vom Fahrzeug abgenommen werden, kann die Transportstrecke in vorteilhafter Weise dazu ausgebildet sein, einen in der Transportstrecke vorhandenen Mitnahmekörper entsprechend einer an diesem vorgesehenen Speichereigenschaft von einem Zustand geringerer Speicherauslastung zu einem Zustand höherer Speicherauslastung aufzuladen bzw. zu befüllen. Alternativ oder zusätzlich kann wenigstens eine der Stationen: Anbringungsstation und Abnahmestation, zur Aufladung oder/und Befüllung von Mitnahmekörpern ausgebildet sein.

In Abhängigkeit von der Art der Mitnahmekörper kann beispielsweise an der Transportstrecke oder/und an wenigstens einer Station eine Flüssigkeits-Befüllungsvorrichtung zur Befüllung von Mitnahmekörpern mit Flüssigkeit vorgesehen sein. Flüssigkeits-Befüllungsvorrichtungen, welche bewegte Behälter während ihrer Bewegung mit einer Flüssigkeit befüllen, sind im Stand der Technik bekannt. Es ist jedoch auch möglich, die Mitnahmekörper an der Transportstrecke zu einer zwischen der Abnahme- und der Anbringungsstation gelegenen Flüssigkeits-Befüllungsvorrichtung zu transportieren, dort anzuhalten und gegebenenfalls sogar von der Transportstrecke zu entnehmen und sie nach einer Befüllung wieder an die Transportstrecke zurückzugeben bzw. weiterzutransportieren.

Die zu befüllende Flüssigkeit kann im Falle von Brennstoffbehältern als Mitnahmekörper ein flüssiger Kraftstoff oder auch Flüssiggas sein, oder kann im Falle von elektrischen Energiespeichern ein Elektrolyt oder demineralisiertes Wasser sein.

Die oben erwähnte Ausbildung der Transportstrecke oder/und der Stationen: Anbringungsstation und Abnahmestation, Mitnahmekörper entsprechend deren Speichereigenschaft aufzuladen, kann dadurch realisiert sein, dass an der Transportstrecke oder/und an wenigstens einer der oben genannten Stationen eine Aufladevorrichtung zur Aufladung von Mitnahmekörpern vorgesehen ist.

Im bevorzugten Fall, dass der Mitnahmekörper ein Energiespeicher zur Speicherung elektrischer Energie ist, kann die Aufladevorrichtung eine Schleifkontaktstrecke zur Kontaktierung von in der Transportstrecke beweglichen Mitnahmekörpern umfassen. Dadurch wird eine Aufladung der Mitnahmekörper mit elektrischer Energie während ihrer Bewegung in der Transportstrecke ermöglicht.

Häufig sind elektrische Energiespeicher mit einem Elektrolyt gefüllt. Um die Kapazität zur Speicherung von elektrischer Energie der Mitnahmekörper zu verbessern, kann vorgesehen sein, dass an der Transportstrecke oder/und an wenigstens einer Station eine Elektrolyt-Umwälzeinrichtung vorgesehen ist.

Weiterhin kann gemäß einer Weiterbildung der vorliegenden Erfindung daran gedacht sein, an der Transportstrecke oder/und an wenigstens einer Station eine Mitnahmekörper-Waschvorrichtung zur Säuberung von Mitnahmekörpern vorzusehen. Darüber hinaus kann daran gedacht sein, an der Transportstrecke oder/und an wenigstens einer der Stationen: Anbringungsstation und Abnahmestation, vorzugsweise an der Abnahmestation, eine Mitnahmekörper-Entleerungsvorrichtung vorzusehen, um einen vom Fahrzeug abgenommenen Mitnahmekörper zu entleeren und somit in einen definierten Ausgangszustand zu setzen. Dabei ist insbesondere daran gedacht, im Falle von Batterien oder Akkumulatoren als Mitnahmekörper den Batterie- bzw. Akkumulatoreninhalt zu entleeren.

Im Falle von Batterien oder Akkumulatoren als Mitnahmekörper kann die oben erwähnte Flüssigkeits-Befüllungsvorrichtung eine Wasser-Befüllungsvorrichtung sein, welche zur Befüllung von Mitnahmekörpern mit Wasser, insbesondere mit demineralisiertem Wasser, ausgebildet ist. Dies erhöht die Speicherfähigkeit und die Lebensdauer der als Batterien oder Akkumulatoren verwendeten Mitnahmekörper.

Mit Bezug auf die zuvor geschilderte alternative Ausführungsform der vorliegenden Erfindung, bei welcher jede der Stationen: Anbringungsstation und Abnahmestation, sowohl eine Mitnahmekörperanbringung als auch eine Mitnahmekörperabnahme ausführen kann, ist es besonders vorteilhaft, wenn jede der Stationen eine Flüssigkeits-Befüllungsvorrichtung, insbesondere eine Wassernachfüllstation, oder/und eine Elektrolyt-Umwälzeinrichtung oder/und eine Mitnahmekörper-Waschvorrichtung oder/und eine Mitnahmekörper-Entleerungsstation aufweist, etwa um im Falle von Batterien als Mitnahmekörper den Batterieinhalt entleeren zu können. Durch diese Weiterbildung der alternativen Ausführungsform der vorliegenden Erfindung kann ein Mitnahmekörper, insbesondere eine Batterie, an jeder der beiden Stationen nach einer Abnahme von einem Fahrzeug aufgefrischt und erneut zur Anbringung an einem Fahrzeug bereitgestellt werden.

Die oben genannte Aufgabe der vorliegenden Erfindung wird ebenfalls gelöst durch ein Fahrzeug, insbesondere Flurförderzeug, mit wenigstens einem zur Mitführung durch das Fahrzeug an diesem in einer Mitführposition anbringbaren und von diesem aus der Mitführposition abnehmbaren Mitnahmekörper, bei welchem Fahrzeug der Mitnahmekörper in einer Mitnahmekörper-Verladerichtung in die Mitführposition am Fahrzeug bringbar ist und in im Wesentlichen derselben Mitnahmekörper-Verladerichtung vom Fahrzeug abnehmbar ist. Ein derartiges Fahrzeug ist bevorzugt aber nicht ausschließlich zusammen mit der zuvor geschilderten Mitnahmekörper-Wechselvorrichtung einsetzbar.

Das Fahrzeug hat den Vorteil, durch seine Ausbildung für die Verlagerung des anzubringenden und des noch am Fahrzeug angebrachten Mitnahmekörpers in derselben Mitnahmekörper-Verladerichtung ein Abnehmen eines Mitnahmekörpers unter gleichzeitiger Zuführung eines anderen Mitnahmekörpers zu ermöglichen, was zu einem effizienten und schnellen Wechseln der Mitnahmekörper führt. Wie bereits oben erläutert wurde, wird ein kurzer Verlagerungsweg der Mitnahmekörper beim Wechseln dann erreicht, wenn die Mitnahmekörper-Verladerichtung im Wesentlichen parallel zur Fahrzeugquerrichtung verläuft. Dann kann darüber hinaus der Mitnahmekörper in einfacher Weise auf dem Rahmen des Fahrzeugs oder auf einem Fahrzeugboden abgestellt werden.

Zur besseren Führung des Mitnahmekörpers beim Anbringen an dem Fahrzeug und beim Abnehmen von diesem kann das Fahrzeug eine Aussparung aufweisen, in welche an einer Fahrzeugseite ein Mitnahmekörper einführbar und aus welcher an der anderen, gegenüberliegenden Fahrzeugseite ein Mitnahmekörper vom Fahrzeug abnehmbar ist. Durch diese Aussparung kann der Mitnahmekörper in wenigstens einer, vorzugsweise in allen, zur Mitnahmekörper-Verladerichtung orthogonalen Raumrichtung gegen eine Verlagerung gesichert werden.

Vorzugsweise durchsetzt die Aussparung das Fahrzeug, wobei das Fahrzeug die Aussparung besonders bevorzugt von vier Seiten umgibt, so dass eine Verlagerung des Mitnahmekörpers lediglich in Mitnahmekörper-Verladerichtung möglich ist. Dadurch werden zusätzliche Fehlbedienungen beim Wechseln der Mitnahmekörper vermieden.

Gemäß einer Weiterbildung des erfindungsgemäßen Fahrzeugs kann dieses eine Mitnahmekörper-Vorschubvorrichtung aufweisen, welche selbständig den Mitnahmekörper zur Bewegung in Verladerichtung antreiben kann. Die Mitnahmekörper-Vorschubvorrichtung kann derart ausgebildet sein, etwa wenn sie einen ausfahrbaren Ausleger aufweist, dass auch ein an einer der Stationen bereitstehender Mitnahmekörper vom Fahrzeug selbständig in dieses eingeführt werden kann. Dadurch ist ein Mitnahmekörperwechsel auch dann möglich, wenn die Stationen: Anbringungsstation und Abnahmestation, nicht selbst mit einem Mitnahmekörperantrieb ausgestattet sind.

Sollte es sich bei dem Mitnahmekörper um einen elektrischen Energiespeicher handeln, so kann das Fahrzeug gemäß einer weiteren vorteilhaften Weiterbildung von außen kontaktierbare elektrische Kontakte aufweisen, so dass eine elektrische Stromversorgung an das Fahrzeug kurzfristig anschließbar ist und dieses mit elektrischer Energie versorgbar ist. In diesem Falle kann das Fahrzeug selbst einen Batteriewechsel vornehmen.

Eine unerwünschte Verlagerung des Mitnahmekörpers in der Mitnahmekörper-Verladerichtung während des normalen Fahrzeugbetriebs kann dadurch verhindert werden, dass das Fahrzeug eine Verriegelungsvorrichtung aufweist, welche den Mitnahmekörper lösbar verriegelt am Fahrzeug hält. Bei geeigneter Gestaltung der Verriegelungsvorrichtung kann diese den Mitnahmekörper derart verriegelt am Fahrzeug halten, dass eine Verlagerung des Mitnahmekörpers in jeder Raumrichtung unmöglich ist. Dies ist vor allen Dingen dann von Vorteil, wenn die oben genannte, das Fahrzeug durchsetzende Aussparung, welche von vier Seiten vom Fahrzeugkörper umgeben ist, nicht realisiert ist.

Damit der Mitnahmekörper-Wechselvorgang ohne umständliche Lösevorgänge der Verriegelungsvorrichtung ablaufen kann, kann die Verriegelungsvorrichtung derart ausgebildet sein, dass sie einen am Fahrzeug vorgesehenen verriegelten Mitnahmekörper bei Annäherung eines weiteren Mitnahmekörpers in der Mitnahmekörper-Verladerichtung entriegelt. Durch diese Weiterbildung der Erfindung kann ein am Fahrzeug noch vorhandener Mitnahmekörper durch Zuführung eines anderen Mitnahmekörpers unter automatischer Entriegelung von dem Fahrzeug abgenommen werden. Zusätzlich oder alternativ kann zur Erhöhung der Sicherheit einerseits und um eine ortsunabhängige Wartung andererseits zu ermöglichen, eine manuell, bevorzugt vom Fahrerplatz aus, betätigbare Handverriegelungsvorrichtung vorgesehen sein.

Konstruktiv kann die automatische Entriegelung in einfacher Art und Weise dadurch gelöst sein, dass die Verriegelungsvorrichtung eine mechanische Bewegungsübertragungsvorrichtung umfasst, welche einen Auslöseabschnitt und einen Verriegelungsabschnitt aufweist, wobei der Verriegelungsabschnitt zwischen einer einen Mitnahmekörper am Fahrzeug verriegelnden Verriegelungsstellung und einer den Mitnahmekörper zur Bewegung in Mitnahmekörper-Verladerichtung freigebenden Freigabestellung verstellbar ist und wobei der Auslöseabschnitt zur Betätigung durch einen in Mitnahmekörper-Verladerichtung verfahrenden Mitnahmekörper ausgebildet und derart mit dem Verriegelungsabschnitt gekoppelt ist, dass dieser bei Betätigung des Auslöseabschnitts von der Verriegelungsstellung in die Freigabestellung verstellt wird. Derartige mechanisch gesteuerte Verriegelungsvorrichtungen bieten eine große Zuverlässigkeit.

Um zu gewährleisten, dass ein Mitnahmekörper bei Erreichen der Mitführposition am Fahrzeug sicher verriegelt wird, kann der Verriegelungsabschnitt in die Verriegelungsstellung vorgespannt ist. Der Verriegelungsabschnitt kann dabei dergestalt sein, dass er zwar trotz seiner Vorspannung in die Verriegelungsstellung ein Erreichen der Mitführposition durch den Mitnahmekörper gestattet, diesen jedoch gegen eine weitere Verlagerung durch einen Verriegelungseingriff sperrt, sobald er die Mitführposition erreicht hat.

Im Falle von Energiespeichern als Mitnahmekörper, etwa zur Speicherung von flüssigen oder gasförmigen Kraftstoffen, ist vor und nach dem Wechsel des Mitnahmekörpers ein in der Regel manuelles Trennen bzw. Verbinden des Mitnahmekörpers mit dem Fahrzeug erforderlich. Jedoch ist auch hier eine automatisch ausführbare Trennung eines Kraftstoffspeichers von Verbrauchern sowie eine automatisch herstellbare Verbindung desselben mit Verbrauchern am Fahrzeug denkbar. Im Falle von Batterien oder Akkumulatoren als Mitnahmekörper kann jedoch eine Energieübertragungsverbindung vom Mitnahmekörper zum Fahrzeug sehr einfach automatisch hergestellt bzw. getrennt werden, wenn das Fahrzeug eine Schleifkontaktanordnung zum automatischen Kontaktieren von elektrischen Kontakten an den Mitnahmekörpern aufweist.

Die eingangs genannte, der vorliegenden Erfindung zugrunde liegende Aufgabe wird schließlich auch gelöst durch ein Verfahren zum Wechseln von Mitnahmekörpern an einem Fahrzeug, bei welchem eine Zuführbewegung eines ersten Mitnahmekörpers in eine Mitführposition am Fahrzeug wenigstens abschnittsweise gleichzeitig mit einer Abnahmebewegung eines zweiten Mitnahmekörpers aus der Mitführposition erfolgt. Dies wurde oben bereits ausführlich erläutert.

Wie oben ebenfalls bereits erläutert wurde, wird das wenigstens abschnittsweise gleichzeitige Verlagern des ersten und des zweiten Mitnahmekörpers dadurch möglich, dass der erste Mitnahmekörper in einer Mitnahmekörper-Verladerichtung dem Fahrzeug zugeführt wird und dieser dabei einen bereits am Fahrzeug in einer Mitführposition angeordneten zweiten Mitnahmekörper in der Mitnahmekörper-Verladerichtung verlagert und dadurch aus der Mitführposition wegbewegt.

Die vorliegende Erfindung wird im Folgenden anhand der beiliegenden Zeichnungen näher erläutert werden. Dabei stellt dar:
- Fig. 1: eine perspektivische Ansicht einer ersten Ausführung einer erfindungsgemäßen Mitnahmekörper-Wechselstation von schräg hinten ohne Fahrzeug,
- Fig. 2: die in Fig. 1 gezeigte Mitnahmekörper-Wechselstation von schräg vorne mit Fahrzeug,
- Fig. 3: eine perspektivische Ansicht der Mitnahmekörper-Wechselstation von Fig. 1 und 2 von schräg hinten mit Fahrzeug,
- Fig. 4: eine perspektivische Ansicht des in den Figuren 2 und 3 gezeigten Fahrzeugs von schräg hinten mit Mitnahmekörper,
- Fig. 5: eine Seitenansicht des Fahrzeugs von Fig. 4 ohne Mitnahmekörper,
- Fig. 6: eine perspektivische Ansicht einer zweiten Ausführungsform der erfindungsgemäßen Mitnahmekörper-Wechselstation von schräg oben ohne Fahrzeug,
- Fig. 7: eine perspektivische Ansicht der Mitnahmekörper-Wechselstation von Fig. 6 von schräg oben mit Fahrzeug,
- Fig. 8: eine Draufsicht der Mitnahmekörper-Wechselstation mit Fahrzeug von Fig. 7.

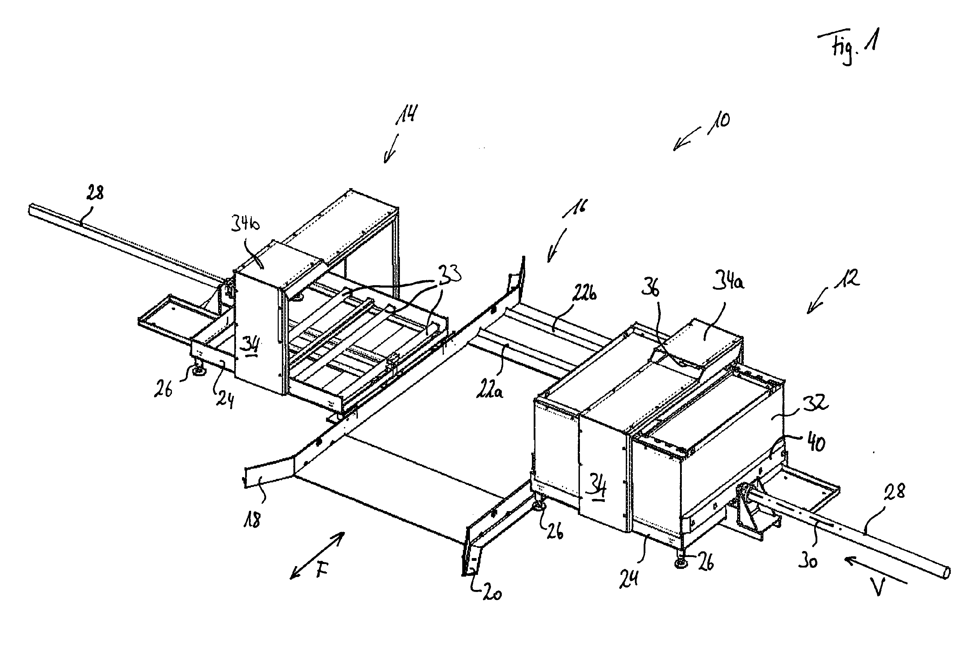

In Fig. 1 ist eine erste Ausführungsform einer erfindungsgemäßen Mitnahmekörper-Wechselvorrichtung allgemein mit 10 bezeichnet. Die Wechselvorrichtung 10 umfasst eine Anbringungsstation 12 und eine Abnahmestation 14. Zwischen der Anbringungsstation 12 und der Abnahmestation 14 ist eine Fahrzeugaufnahmestation 16 vorgesehen, in welche ein Fahrzeug in Richtung des Doppelpfeils F einfahrbar und aus dieser ausfahrbar ist. Seitliche Begrenzungsleisten 18 und 20 legen die seitliche Position des Fahrzeugs in der Fahrzeugaufnahmestation 16 fest. Weiter sind an der Fahrzeugaufnahmestation Bodenschwellen 22a und 22b vorgesehen, zwischen welchen die an einer gemeinsamen Achse vorgesehenen Räder des Fahrzeugs derart angeordnet werden, dass sie in Anlage mit den Bodenschwellen sind. Somit kann das Fahrzeug mit einfachen Mitteln in einer definierten Position in der Fahrzeugaufnahmestation 16 angeordnet werden.

Die Anbringungsstation 12 umfasst ein Gestell 24, welches auf einem Werkshallenboden zur besseren Justierung mit höhenveränderlichen Beinen 26 abgestellt ist.

Die Anbringungsanordnung 12 weist eine Kolben-Zylinder-Einheit 28 auf, deren strichpunktiert angedeuteter Kolben 30 parallel zur Richtung des Pfeils V, d.h. in Mitnahmekörper-Verladerichtung V und entgegen dieser Richtung, bewegbar ist. Somit kann die in der Anbringungsstation 12 vorhandene Batterie 32 als Mitnahmekörper in Richtung des Pfeils V zur Fahrzeugaufnahmestation 16 hin verlagert werden. Um diese Verlagerung zu erleichtern, sind in der Anbringungsstation 12 nicht dargestellte Laufrollen vorgesehen, welche um zur Mitnahmekörper-Verladerichtung V orthogonale und zur Ebene des Aufstandsbodens der Anbringungsstation parallele Rollachsen drehen. Die Abnahmestation 14 ist im Wesentlichen identisch zur Anbringungsstation 12 aufgebaut. Da in ihr in der Darstellung von Fig. 1 keine Batterie 32 angeordnet ist, sind hier die Laufrollen 33 zu erkennen.

Die Anbringungsstation 12, wie auch die Abnahmestation 14, weisen einen Führungsrahmen 34 auf. Dieser ist derart angeordnet, dass er eine Batterie 32, welche auf der jeweiligen Station angeordnet ist, umgibt. Der Führungsrahmen 34 ist fest mit dem Gestell 24 verbunden. Er dient dazu, ein seitliches Abrutschen der Batterie 32 bei deren Verlagerung in der Mitnahmekörper-Verladerichtung V zu verhindern. Dadurch wird ein genaues Positionieren der Batterie 32 möglich.

Weiterhin kann in dem Führungsrahmen 34 der Anbringungsstation 12 eine Aufnahme 34a ausgebildet sein, in welcher Kontakte 36 angeordnet sind, die elektrische Kontakte der Batterie 32 während ihrer Bereitschaftsstellung in der Anbringungsstation 12 kontaktieren und dadurch ein Aufladen der Batterie 32 ermöglichen. Darüber hinaus dient der Führungsrahmen 34, welcher derart an der Anbringungsstation angeordnet ist, dass er die elektrischen Kontakte einer in der Anbringungsstation 12 vorgesehenen Batterie 32 abdeckt, dazu, das Risiko von unbeabsichtigten Kurzschlüssen der Batterie 32 zu verringern.

Aufgrund des im Wesentlichen identischen Aufbaus der in Fig. 1 dargestellten Abnahmestation 14 und der Anbringungsstation 12 kann jede der Stationen 12 und 14 abwechselnd als Anbringungsstation bzw. Abnahmestation eingesetzt werden. So könnte ein Fahrzeug in die Fahrzeugaufnahmestation 16 einfahren, woraufhin die Anbringungsstation 12 die Batterie 32 in das Fahrzeug einschiebt, wobei gleichzeitig die beim Einfahren am Fahrzeug vorhandene Batterie in die Abnahmestation 14 in der Mitnahmekörper-Verladerichtung V ausgeschoben wird. Dann wird die jetzt an der Station 14 vorhandene Batterie über nicht dargestellte Kontakte in der Aufnahme 34b wieder aufgeladen, woraufhin ein übernächstes Fahrzeug, welches in die Fahrzeugaufnahmestation 16 einfährt, von der Station 14 aus eine neu aufgeladene Batterie erhält, wobei bei Einführung dieser Batterie in das Fahrzeug die darin vorhandene Batterie entgegen der in Fig. 1 dargestellten Richtung des Pfeils V in die Station 12 ausgeschoben wird. Nach Abschluss dieses Vorgangs liegt wieder der in Fig. 1 dargestellte Zustand vor. Bei dem gerade geschilderten Mitnahmekörperwechsel diente dann jedoch die Station 14 als Anbringungsstation und die Station 12 als Abnahmestation.

In Fig. 2 ist die in Fig. 1 gezeigte Ausführungsform einer Mitnahmekörper-Wechselvorrichtung 10 mit in die Fahrzeugaufnahmestation 16 eingefahrenem Fahrzeug 50 dargestellt. Fig. 2 ist im Gegensatz zu Fig. 1 eine Ansicht von schräg vorne.

Es ist zu erkennen, wie die Bodenschwellen 22a und 22b die Vorderreifen 52a und 52b des schematisch dargestellten Staplers 50 in Richtung des Doppelpfeils F fixieren und somit für eine fluchtende Anordnung einer das Fahrzeug 50 in Fahrzeugquerrichtung Q durchsetzenden Ausnehmung 54 mit der Batterie 32 in der Anbringungsstation 12 in der Verladerichtung V sorgen.

In Fig. 3, welche eine Ansicht der Wechselstation 10 von Fig. 2 von schräg hinten, jedoch von der Seite der Abnahmestation 14 aus ist, ist der Wechselvorgang von Mitnahmekörpern dargestellt.

Während die Kolben-Zylinder-Einheit 28 die in Fig. 3 nicht mehr sichtbare Batterie 32 in der Verladerichtung V in die Aussparung 54 am Stapler 50 einschiebt, wird die beim Einfahren des Fahrzeugs 50 in die Fahrzeugaufnahmestation 16 am Fahrzeug vorhandene Batterie 38 in derselben Verladerichtung V aus dem Fahrzeug 50 hinausbewegt. Die Abnahmebewegung der Batterie 38 vom Fahrzeug 50 wird noch durch den Kolben 30 der Kolben-Zylinder-Einheit 28 der Abnahmestation 14 unterstützt, welcher mit einer Angriffsleiste 40 der Batterie 38 gekoppelt ist und ebenfalls eine in Verladerichtung V wirkende Kraft auf die Batterie 38 ausübt. Um eine Station sowohl als Anbringungsstation 12 als auch als Abnahmestation 14 verwenden zu können, werden vorzugsweise doppelt wirkende Kolben-Zylinder-Einheiten 28 verwendet. Die Batterien 32 und 38 sind im Wesentlichen baugleich, weshalb auch in den Figuren 1 und 2 Angriffsleisten 40 an der Batterie 32 zu sehen sind.

In Fig. 4 ist in perspektivischer Ansicht das Fahrzeug 50 nach dem in Fig. 3 gezeigten Batterie-Wechselvorgang dargestellt. Es ist zu erkennen, dass die Batterie 32 in einer das Fahrzeug 50 in Fahrzeugquerrichtung Q durchsetzenden Ausnehmung 54 angeordnet ist. Wenn sich das Fahrzeug 50 in der Fahrzeugaufnahmestation 16 befindet, ist die Fahrzeugquerrichtung Q parallel zur Verladerichtung V.

Die Batterie 32 ist sehr einfach auf einem Boden 56 des Fahrzeugs abgestellt, welcher die Gewichtskraft der Batterie 32 aufnimmt. Der Fahrzeugkörper 58 umgibt die Ausnehmung 54, abgesehen vom Boden 56, von drei Seiten, nämlich von vorne, von oben und von hinten, so dass die Batterie 32 sich relativ zum Fahrzeug 50 nicht in diese Richtungen bewegen kann. Es ist lediglich eine Bewegung in Fahrzeugquerrichtung möglich, diese ist jedoch in dem in Fig. 3 gezeigten Betriebszustand durch eine nicht dargestellte Verriegelungsvorrichtung durch Formschlussverbindung mit einem Verriegelungsabschnitt in der in Fig. 4 gezeigten Mitführposition im Fahrzeug 50 festgelegt. Alternativ oder zusätzlich ist eine kraft- oder reibschlüssige Verbindung des Verriegelungsabschnitts mit dem Mitnahmekörper denkbar.

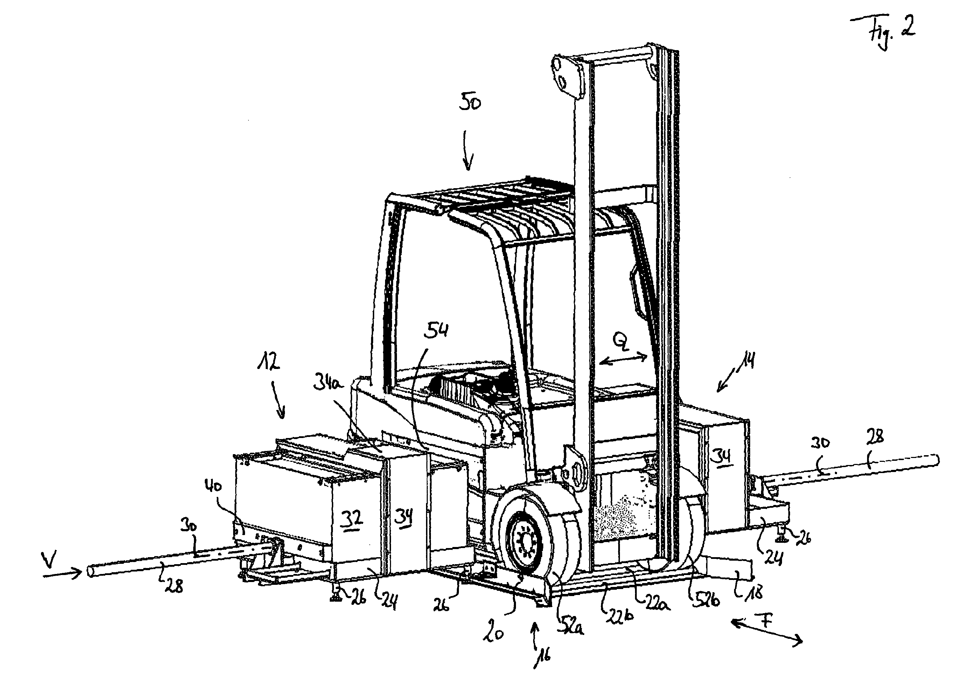

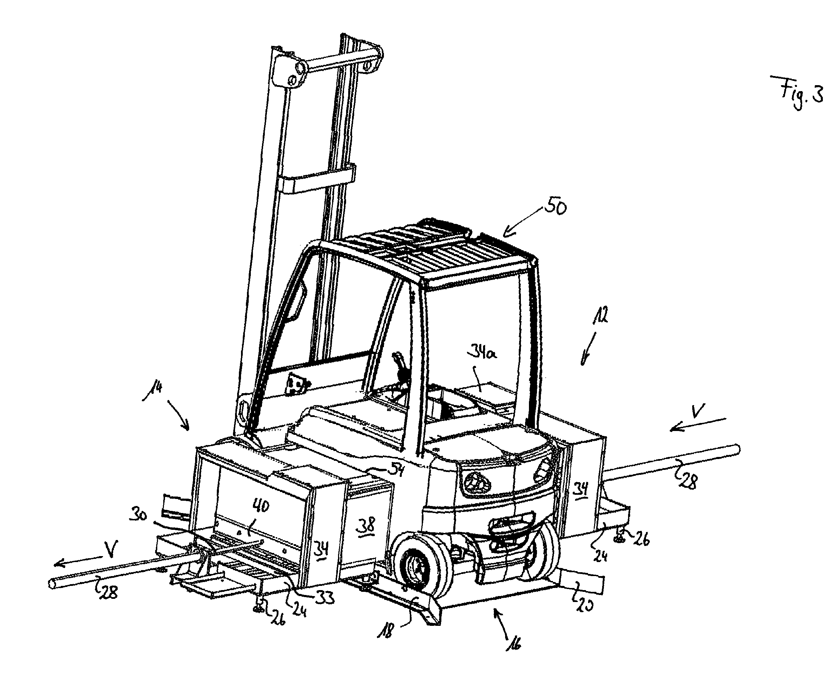

Fig. 5 zeigt eine Ansicht des Fahrzeugs 50 von der Seite. Das Fahrzeug 50 ist ohne Batterie dargestellt.

Es ist zu erkennen, dass vom Fahrzeugboden 56 Verriegelungsabschnitte 60 unter Federvorspannung in ihre Verriegelungsstellung vorstehen, in welcher sie in eine Ausnehmung einer Batterie in der Mitführposition eingreifen. Die Verriegelungsvorrichtung oder Abschnitte von ihr müssen jedoch nicht am Boden 56 des Fahrzeugs 50 vorgesehen sein, sondern können nach Wahl durch den Fachmann in beliebigen Bereichen der Ausnehmung 54 angeordnet sein.

Weiterhin ist ein nahe des Randes der Ausnehmung 54 vorgesehener Auslöseabschnitt 62 gezeigt, welcher bei Einführen einer Batterie in die Ausnehmung 54 parallel zur Fahrzeugquerrichtung Q von der einfahrenden Batterie um eine in Fahrzeuglängsrichtung L verlaufende Achse schwenkt und derart mit den Verriegelungsabschnitten 60 zur Bewegungsübertragung gekoppelt ist, dass ein Verschwenken des Auslöseabschnitts 62 ein Zurückziehen der Verriegelungsabschnitte 60 aus der Verriegelungsstellung in eine Freigabestellung bewirkt, so dass eine am Fahrzeug angeordnete Batterie parallel zur Fahrzeugquerrichtung bewegt werden kann.

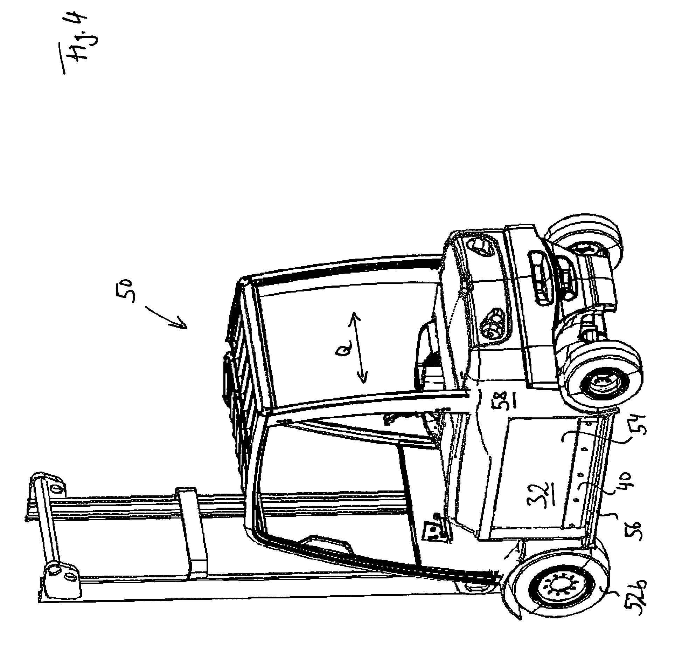

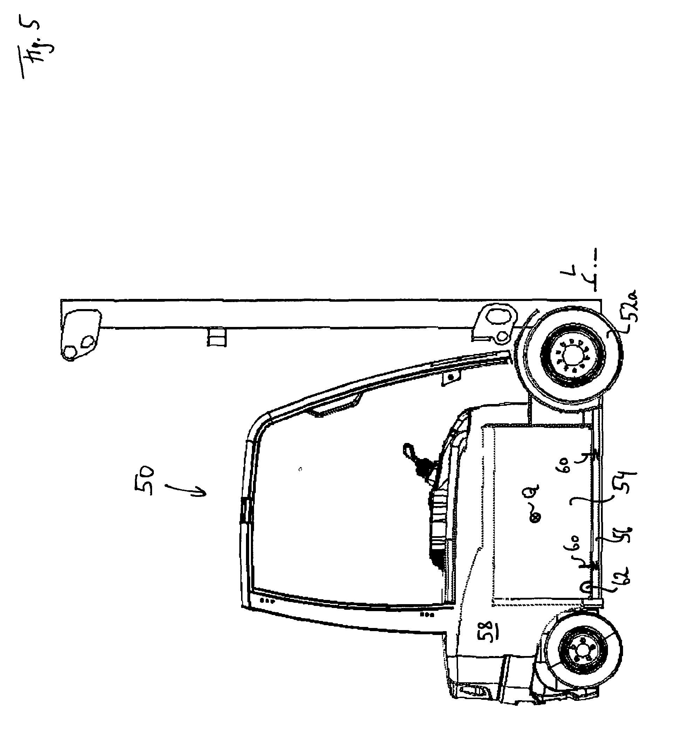

In den Figuren 6 bis 8 ist eine zweite Ausführungsform der erfindungsgemäßen Mitnahmekörper-Wechselvorrichtung dargestellt. Gleiche Bauteile der zweiten Ausführungsform sind mit gleichen Bezugszeichen versehen wie in der ersten Ausführungsform, jedoch erhöht um die Zahl 100. Zur näheren Erläuterung dieser Bauteile wird ausdrücklich auf die Beschreibung der ersten Ausführungsform in den Figuren 1 bis 5 verwiesen. Es wird weiter darauf hingewiesen, dass die Wechselvorrichtung 110 in den Figuren 6 bis 8 lediglich schematisch dargestellt ist.

Die in Fig. 6 dargestellte Mitnahmekörper-Wechselvorrichtung 110 führt von der Anbringungsstation 112 aus eine vollständig aufgeladene Batterie 132 in Mitnahmekörper-Verladerichtung V' einem in Fig. 6 nicht dargestellten Fahrzeug zu. Die Mitnahmekörper-Verladerichtung V' der zweiten Ausführungsform ist der Verladerichtung V der ersten Ausführungsform entgegengesetzt. Beim Einschieben einer neu aufgeladenen Batterie 132 in ein Fahrzeug wird gleichzeitig die zum Einfahrzeitpunkt des Fahrzeugs in die Wechselstation 110 am Fahrzeug vorhandene Batterie in die Abnahmestation 114 eingeschoben. Zur Unterstützung dieser Bewegung einer Batterie in die Abnahmestation 114 hinein kann an der Abnahmestation 114 ebenfalls eine Kolben-Zylinder-Einheit 128 vorgesehen sein, wie durch die strichlinierte Darstellung eines Kolbens 130 angedeutet ist.

In Fig. 6 ist die Anbringungsstation 112 über eine Transportstrecke 170 mit der Abnahmestation 114 verbunden. Die Transportstrecke 170 verfügt über Fördermittel, wie etwa angetriebene Förderwalzen, durch die Batterien im Gegenuhrzeigersinn von der Abnahmestation 114 zur Anbringungsstation 112 transportiert werden. Weiter umfasst die Transportstrecke 170 eine Aufladevorrichtung 172, welche mit einer Spannungsquelle 174 verbunden ist. Die Aufladevorrichtung 172 verfügt über nicht dargestellte Schleifkontakte, welche elektrische Kontakte 135 der Batterien 132, 137 usw. längs des gesamten Transportwegs der Batterien von der Abnahmestation 114 zur Anbringungsstation 112 kontaktieren. Während des gesamten Transportwegs werden die Batterien über den so hergestellten Schleifkontakt durch die Aufladevorrichtung 172 elektrisch aufgeladen.

Die Bewegung der Batterien von der Abnahmestation 114 zur Anbringungsstation 112 kann kontinuierlich oder getaktet erfolgen.

Weiterhin können an der Transportstrecke 170 eine Wasser-Befüllungsvorrichtung 176 und eine Elektrolyt-Umwälzvorrichtung 178 vorgesehen sein. Bei einem getakteten Betrieb kann eine vor diesen Vorrichtungen 176 und 178 ruhende Batterie 139 mit demineralisiertem Wasser aufgefüllt (und zwar von der Wasser-Befüllungsvorrichtung 176) und ihr Elektrolyt umgewälzt (und zwar von der Elektrolyt-Umwälzvorrichtung 178) werden. Fachleute werden erkennen, dass auch Wasser-Befüllungsvorrichtungen und Elektrolyt-Umwälzvorrichtungen eingesetzt werden können, bei welchen während einer kontinuierlichen Bewegung der Batterie demineralisiertes Wasser aufgefüllt und Elektrolyt umgewälzt werden kann.

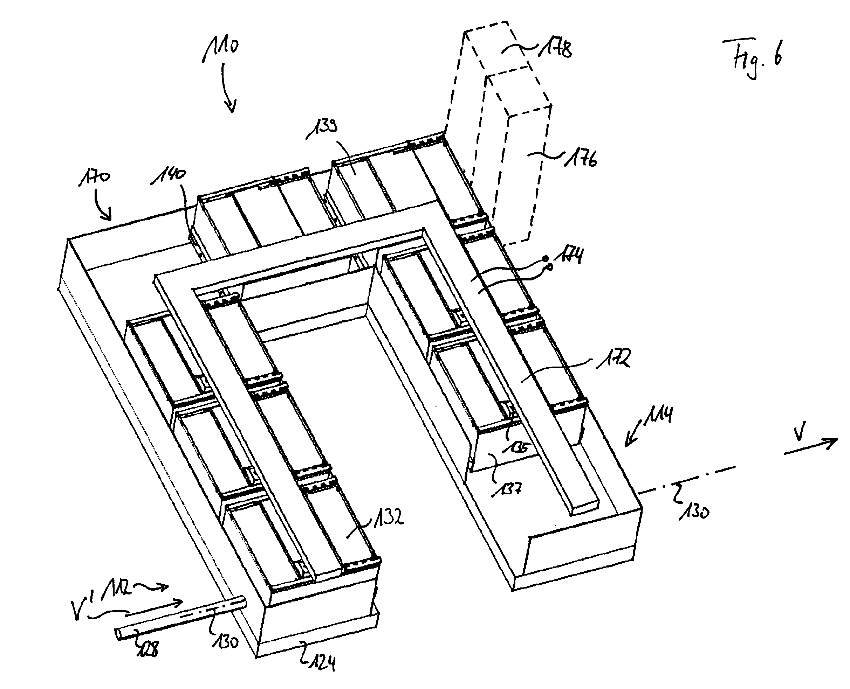

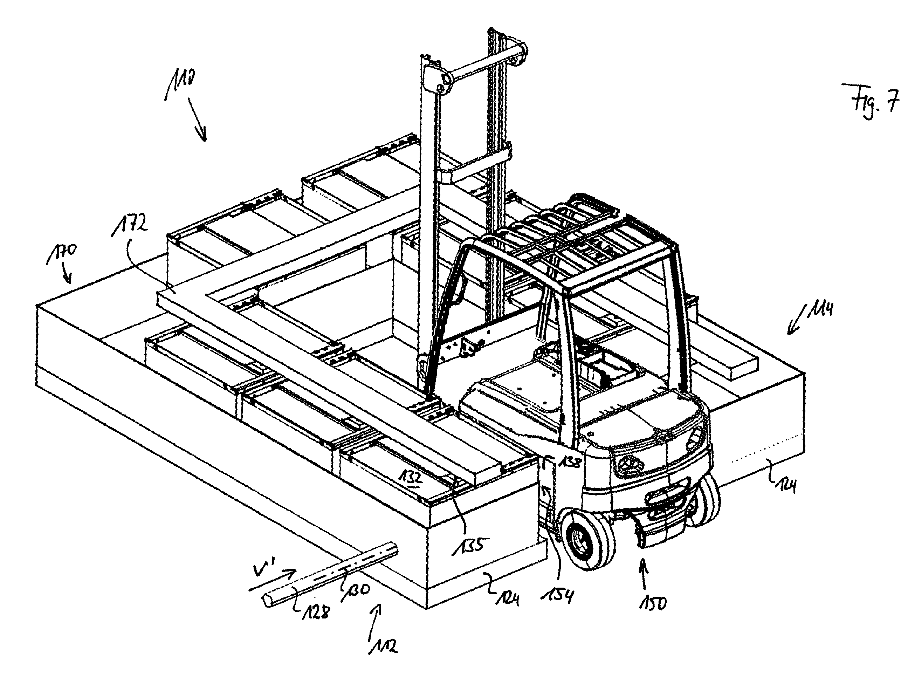

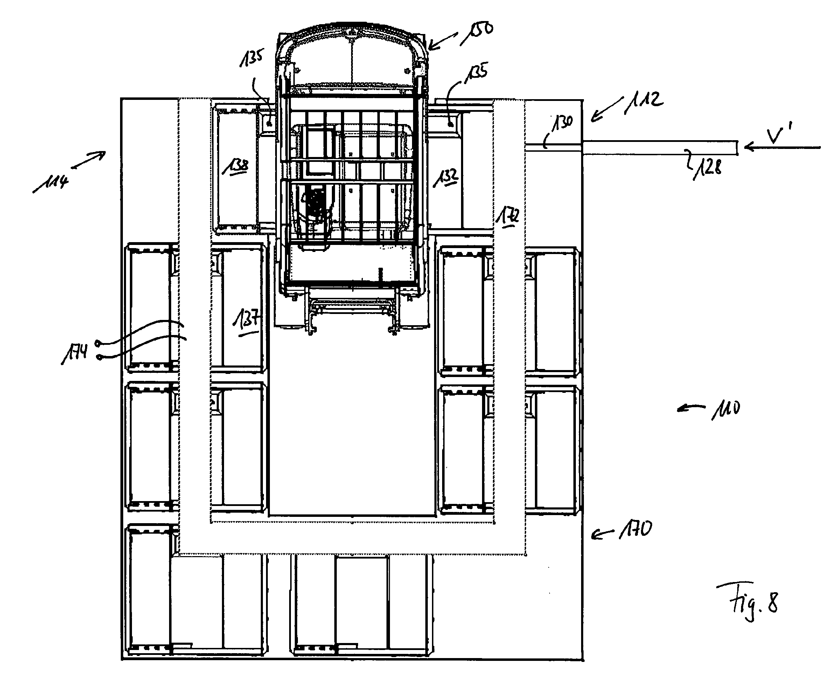

Fig. 7 zeigt die Mitnahmekörper-Wechselvorrichtung der zweiten Ausführungsform von Fig. 6 aus ähnlicher Perspektive, mit einem darin angeordneten Fahrzeug 150. Fig. 8 zeigt zur besseren Erläuterung die Wechselvorrichtung 110 in Draufsicht, wobei in Fig. 8 gerade eine verbrauchte Batterie 138 gegen eine neue Batterie 132 durch Verlagerung jeweils in der Mitnahmekörper-Verladerichtung V' gewechselt wird. Dadurch, dass die verbrauchte Batterie 138 durch die neue Batterie 132 aus dem Fahrzeug 150 ausgeschoben wird, ist der Anbringungsvorgang einer neuen Batterie mit dem Abnahmevorgang einer verbrauchten Batterie parallelisiert, was zu einer starken zeitlichen Verkürzung und damit verbunden einer Verringerung der Ausfallzeit des Fahrzeugs führt.

## Patentansprüche

1. Mitnahmekörper-Wechselvorrichtung (10; 110) mit einer Anbringungsstation (12; 112) zum Anbringen wenigstens eines ersten Mitnahmekörpers (32; 132), vorzugsweise Energiespeichers (32; 132), besonders bevorzugt Batterie (32; 132), an einem Fahrzeug (50; 150), insbesondere Flurförderzeug (50; 150), und einer Abnahmestation (14; 114) zum Abnehmen wenigstens eines vom ersten verschiedenen zweiten Mitnahmekörpers (38; 138) von dem Fahrzeug (50; 150), wobei ein erster Mitnahmekörper (32; 132) dem Fahrzeug (50; 150) von der Anbringungsstation (12; 112) im Wesentlichen in einer Mitnahmekörper-Verladerichtung (V; V') zuführbar ist und wobei der zweite Mitnahmekörper (38; 138) durch Verlagerung in der Mitnahmekörper-Verladerichtung (V; V') vom Fahrzeug (50; 150) abnehmbar und der Abnahmestation (14; 114) zuführbar ist.

2. Mitnahmekörper-Wechselvorrichtung nach Anspruch 1,
**dadurch gekennzeichnet, dass** die Anbringungsstation (12; 112) und die Abnahmestation (14; 114) mit einem in Mitnahmekörper-Verladerichtung (V; V) verlaufenden Abstand voneinander angeordnet sind, welcher derart bemessen ist, dass das Fahrzeug (50; 150) zwischen den Stationen: Anbringungsstation (12; 112) und Abnahmestation (14; 114), anordenbar ist, vorzugsweise einfahrbar und ausfahrbar ist.

3. Mitnahmekörper-Wechselvorrichtung nach Anspruch 2,
**dadurch gekennzeichnet, dass** die Mitnahmekörper-Verladerichtung (V; V) im Wesentlichen orthogonal zu einer Längsachse (L) eines zwischen Anbringungs- (12; 112) und Abnahmestation (14; 114) vorhandenen Fahrzeugs (50; 150) und vorzugsweise zusätzlich im Wesentlichen parallel zu einer Fahrzeugaufstandsfläche verläuft.

4. Mitnahmekörper-Wechselvorrichtung nach einem der vorhergehenden
**dadurch gekennzeichnet, dass** sie weiterhin eine zwischen den Stationen: Anbringungsstation (12) und Abnahmestation (14), vorgesehene Fahrzeug-Aufnahmestation (16) aufweist, in welcher das Fahrzeug (50) in einer vorbestimmten Verladestellung anordenbar ist.

5. Mitnahmekörper-Wechselvorrichtung nach Anspruch 4,
**dadurch gekennzeichnet, dass** die Fahrzeug-Aufnahmestation (16) wenigstens ein Anschlagmittel (22a, 22b) aufweist, welches derart angeordnet ist, dass sich das Fahrzeug (50) in der Verladestellung befindet, wenn ein zur Anlage an dem Anschlagmittel (22a, 22b) ausgebildeter Fahrzeugabschnitt (52a, 52b) in Anlage an dem Anschlagmittel (22a, 22b) ist.

6. Mitnahmekörper-Wechselvorrichtung nach einem der vorhergehenden Ansprüche,
**dadurch gekennzeichnet, dass** die Anbringungsstation (12; 112) eine Antriebseinrichtung (28, 30; 128, 130) aufweist, welche dazu ausgebildet ist, Mitnahmekörper (32; 132) zur Bewegung in der Verladerichtung (V; V') anzutreiben.

7. Mitnahmekörper-Wechselvorrichtung nach einem der vorhergehenden Ansprüche,
**dadurch gekennzeichnet, dass** die Abnahmestation (14) eine Fördereinrichtung (28, 30) aufweist, welche dazu ausgebildet ist, Mitnahmekörper (38) zur Bewegung in der Verladerichtung (V) anzutreiben.

8. Mitnahmekörper-Wechselvorrichtung nach einem der vorhergehenden Ansprüche,
**dadurch gekennzeichnet, dass** der wenigstens eine erste (32; 132) und der wenigstens eine zweite Mitnahmekörper (38; 138) im Wesentlichen baugleich, vorzugsweise standardisiert, sind.

9. Mitnahmekörper-Wechselvorrichtung nach einem der vorhergehenden Ansprüche,
**dadurch gekennzeichnet, dass** zwischen Anbringungsstation (112) und Abnahmestation (114) eine Transportstrecke (170) vorgesehen ist, welche zum Transport von Mitnahmekörpern (132, 138, 139) zwischen den Stationen: Anbringungsstation (112) und Abnahmestation (114), insbesondere von der Abnahmestation (114) zur Anbringungsstation (112), ausgebildet ist.

10. Mitnahmekörper-Wechselvorrichtung nach einem der vorhergehenden Ansprüche,
**dadurch gekennzeichnet, dass** die Transportstrecke (170) oder/und wenigstens eine der Stationen: Anbringungsstation (12; 112) und Abnahmestation (14; 114), dazu ausgebildet ist, einen Mitnahmekörper (139) entsprechend einer an diesem vorgesehenen Speichereigenschaft von einem Zustand geringerer Speicherauslastung zu einem Zustand höherer Speicherauslastung aufzuladen bzw. zu befüllen.

11. Mitnahmekörper-Wechselvorrichtung nach einem der vorhergehenden Ansprüche,
**dadurch gekennzeichnet, dass** an der Transportstrecke (170) oder/und an wenigstens einer der Stationen: Anbringungsstation (12; 112) und Abnahmestation (14; 114), eine Flüssigkeits-Befüllungsvorrichtung (176) zur Befüllung von Mitnahmekörpern (139) mit Flüssigkeit vorgesehen ist.

12. Mitnahmekörper-Wechselvorrichtung nach einem der vorhergehenden Ansprüche,
**dadurch gekennzeichnet, dass** an der Transportstrecke (170) oder/und an wenigstens einer der Stationen: Anbringungsstation (12; 112) und Abnahmestation (14; 114), eine Aufladevorrichtung (34a; 172) zur Aufladung von Mitnahmekörpern (32; 138, 139) vorgesehen ist.

13. Mitnahmekörper-Wechselvorrichtung nach einem der vorhergehenden Ansprüche,
**dadurch gekennzeichnet, dass** der Mitnahmekörper (32, 38; 132, 138, 139) ein Energiespeicher ist.

14. Mitnahmekörper-Wechselvorrichtung nach Anspruch 13,
**dadurch gekennzeichnet, dass** der Energiespeicher (32, 38; 132, 138, 139) zur Speicherung elektrischer Energie ausgebildet ist.

15. Mitnahmekörper-Wechselvorrichtung nach den Ansprüchen 12 bis 14,
**dadurch gekennzeichnet, dass** die Aufladevorrichtung (34a; 172) Schleifkontakte, vorzugsweise eine Schleifkontaktstrecke, zur elektrischen Kontaktierung von Mitnahmekörpern (32; 138, 139) umfasst.

16. Mitnahmekörper-Wechselvorrichtung nach den Ansprüchen 12 bis 14, gegebenenfalls unter Einbeziehung des Anspruchs 15,
**dadurch gekennzeichnet, dass** an der Transportstrecke (170) oder/und an wenigstens einer der Stationen: Anbringungsstation (12; 112) und Abnahmestation (14; 114), eine Elektrolyt-Umwälzeinrichtung (178) vorgesehen ist.

17. Mitnahmekörper-Wechselvorrichtung nach Anspruch 11, gegebenenfalls unter Einbeziehung wenigstens eines der Ansprüche 12 oder 16,
**dadurch gekennzeichnet, dass** die Flüssigkeits-Befüllungsvorrichtung (176) eine Wasser-Befüllungsvorrichtung (176) ist, welche zur Befüllung von Mitnahmekörpern (139) mit Wasser ausgebildet ist.

18. Fahrzeug, insbesondere Flurförderzeug, mit wenigstens einem zur Mitführung durch das Fahrzeug an diesem in einer Mitführposition anbringbaren und von diesem aus der Mitführposition abnehmbaren Mitnahmekörper (32, 38; 132, 138),
**dadurch gekennzeichnet, dass** der Mitnahmekörper (32, 38; 132, 138) in einer Mitnahmekörper-Verladerichtung (V, V') in die Mitführposition am Fahrzeug (50; 150) bringbar ist und in im Wesentlichen derselben Mitnahmekörper-Verladerichtung (V; V') vom Fahrzeug (50; 150) abnehmbar ist.

19. Fahrzeug nach Anspruch 18,
**dadurch gekennzeichnet, dass** die Mitnahmekörper-Verladerichtung (V; V') im Wesentlichen parallel zur Fahrzeugquerrichtung (Q) verläuft.

20. Fahrzeug nach Anspruch 18 oder 19,
**dadurch gekennzeichnet, dass** es eine Aussparung (54; 154) aufweist, in welche an einer Fahrzeugseite ein Mitnahmekörper (32; 132) einführbar und aus welcher an der anderen Fahrzeugseite ein Mitnahmekörper (38; 138) vom Fahrzeug (50; 150) abnehmbar ist.

21. Fahrzeug nach Anspruch 20,
**dadurch gekennzeichnet, dass** die Aussparung (54; 154) das Fahrzeug (50; 150), vorzugsweise in Fahrzeugquerrichtung (Q), durchsetzt.

22. Fahrzeug nach einem der Ansprüche 18 bis 21,
**dadurch gekennzeichnet, dass** es eine Verriegelungsvorrichtung (60, 62) aufweist, welche den Mitnahmekörper (32, 38) lösbar verriegelt am Fahrzeug (50) hält.

23. Fahrzeug nach Anspruch 22,
**dadurch gekennzeichnet, dass** die Verriegelungsvorrichtung (60, 62) derart ausgebildet ist, dass sie einen am Fahrzeug (50) vorgesehenen verriegelten Mitnahmekörper (38) bei Annäherung eines weiteren Mitnahmekörpers (32) in der Mitnahmekörper-Verladerichtung (V) entriegelt.

24. Fahrzeug nach Anspruch 23,
**dadurch gekennzeichnet, dass** die Verriegelungsvorrichtung (60, 62) eine mechanische Bewegungsübertragungsvorrichtung umfasst, welche einen Auslöseabschnitt (62) und einen Verriegelungsabschnitt (60) aufweist, wobei der Verriegelungsabschnitt (60) zwischen einer einen Mitnahmekörper (38) am Fahrzeug verriegelnden Verriegelungsstellung und einer den Mitnahmekörper (38) zur Bewegung in Mitnahmekörper-Verladerichtung (V) freigebenden Freigabestellung verstellbar ist und wobei der Auslöseabschnitt (62) zur Betätigung durch einen in Mitnahmekörper-Verladerichtung (V) verfahrenden Mitnahmekörper (32) ausgebildet und derart mit dem Verriegelungsabschnitt (60) gekoppelt ist, dass dieser bei Betätigung des Auslöseabschnitts (62) von der Verriegelungsstellung in die Freigabestellung verstellt wird.

25. Fahrzeug nach Anspruch 24,
**dadurch gekennzeichnet, dass** der Verriegelungsabschnitt (60) in die Verriegelungsstellung vorgespannt ist.

26. Fahrzeug nach einem der Ansprüche 18 bis 25,
**dadurch gekennzeichnet, dass** der Mitnahmekörper (32, 38; 132, 138) ein Speicher für elektrische Energie ist und das Fahrzeug (50; 150) eine Schleifkontaktanordnung zum automatischen Kontaktieren des Energiespeichers aufweist.

27. Verfahren zum Wechseln von Mitnahmekörpern an einem Fahrzeug (50; 150), bei welchem eine Zuführbewegung eines ersten Mitnahmekörpers (32; 132) in eine Mitführposition am Fahrzeug (50; 150) wenigstens abschnittsweise gleichzeitig mit einer Abnahmebewegung eines zweiten Mitnahmekörpers (38; 138) aus der Mitführposition erfolgt.

28. Verfahren nach Anspruch 27,
**dadurch gekennzeichnet, dass** der erste Mitnahmekörper (32; 132) in einer Mitnahmekörper-Verladerichtung (V; V') dem Fahrzeug (50; 150) zugeführt wird und dieser dabei einen bereits am Fahrzeug (50; 150) in einer Mitführposition angeordneten zweiten Mitnahmekörper (38; 138) in der Mitnahmekörper-Verladerichtung (V; V') verlagert und **dadurch** aus der Mitführposition wegbewegt.
